# EUROPÄISCHE PATENTSCHRIFT

(11) **EP 3 374 796 B1**
(45) Veröffentlichungstag und Bekanntmachung des Hinweises auf die Patenterteilung: **24.07.2019**
(21) Anmeldenummer: 16763262.9
(22) Anmeldetag: 09.09.2016
(51) Int. Cl.: G01S 17/93, G01S 7/481, G01S 17/89, G01S 7/497, B60S 1/54, B60S 1/56

(54) **OPTISCHES SYSTEM FÜR EINE UMFELDERFASSUNGSVORRICHTUNG**
OPTICAL SYSTEM FOR AN ENVIRONMENTAL-SENSING DEVICE
SYSTÈME OPTIQUE POUR UN DISPOSITIF DE DÉTECTION D'ENVIRONNEMENT

(30) Priorität: 10.11.2015 DE 102015222053
(43) Veröffentlichungstag der Anmeldung: 19.09.2018
(73) Patentinhaber: Robert Bosch GmbH, 70442 Stuttgart (DE)
(72) Erfinder: ROCZNIK, Marko, 72124 Pliezhausen (DE)
(86) Internationale Anmeldenummer: PCT/EP2016/071306
(87) Internationale Veröffentlichungsnummer: WO 2017/080699

(56) Entgegenhaltungen:
- CN-Y- 2 298 172
- DE-A1- 10 012 004
- DE-A1-102012 011 590
- JP-A- H1 133 448

## Beschreibung

Die vorliegende Erfindung betrifft ein optisches System für eine Umfelderfassungsvorrichtung. Ferner betrifft die Erfindung ein Lidar-System mit einer Sendeeinheit mit einem solchen optischen System. Weiterhin betrifft die Erfindung ein Verfahren zum Schützen einer ersten lichtdurchlässigen Fläche eines optischen Elementes eines genannten optischen Systems vor wenigstens einem Verschmutzungsobjekt.

### Stand der Technik

Aus dem Stand der Technik sind optische Systeme für in Fahrzeugen einsetzbare Umfelderfassungsvorrichtungen bekannt. Ein solches optisches System ist beispielsweise eine hinter einer Scheibe eines Fahrzeug zu positionierende Kamera. Aus dem Stand der Technik ist ferner bekannt, eine von außerhalb eines solchen optischen Systems kontaktierbare erste lichtdurchlässige Fläche eines optischen Elements des entsprechenden optischen Systems periodisch zu reinigen. In einem solchen Fall ist eine gewisse Verschmutzung der ersten lichtdurchlässigen Fläche zulässig. Eine periodische Reinigung der ersten lichtdurchlässigen Fläche erfolgt üblicherweise mittels einer mechanischen Vorrichtung, wie zum Beispiel eines Scheibenwischers.

Aus dem Dokument DE 10 2005 021 671 A1 ist eine Anordnung mit einer Kamera zum Bereitstellen eines Abbildes einer Umgebung und einer mechanisch wirkenden Reinigungsvorrichtung bekannt. Die Reinigungsvorrichtung ist dazu ausgebildet, einen Strahlungseintrittsbereich der Kamera, der als Objektivoberfläche ausgebildet ist, unmittelbar von Verschmutzungsobjekten zu befreien. Dabei ist die Reinigungsvorrichtung als eine Düse zum Beaufschlagen des Strahlungseintrittsbereichs mit einem Reinigungsmittel ausgebildet, die zum Reinigen des Strahlungseintrittsbereichs vor diesen verbracht wird. Das Reinigungsmittel kann ein auf die Objektivoberfläche gerichteter Druckluftstrom sein.

Aus dem Dokument DE 10 2005 021 670 A1 ist eine Anordnung mit einer Kamera zum Bereitstellen eines Abbildes einer Umgebung und einem Ventilator bekannt. Der Ventilator ist dazu vorgesehen, einen Luftstrom bereitzustellen und mittels des Luftstromes Verschmutzungsobjekte von einem Objektiv der Kamera fernzuhalten. Ferner weist der Ventilator Ventilator-Blätter auf, die das Objektiv bei ausgeschaltetem Ventilator vollständig verdecken können. Weiterhin ist eine Verschlusssteuerung der Kamera mit einer Rotation des Ventilators derartig synchronisiert, dass das Objektiv während einer Belichtungszeit nicht von einem der Ventilator-Blätter verdeckt wird.

Aus dem Dokument DE 100 12 004 A1 ist eine Einrichtung zum Sauberhalten von Sensor- oder Kamera-Abdeckungen bekannt. Die transparente Abdeckung wird mit gezieltem Luftstrom derart beaufschlagt, dass bei Bewegung der Abdeckung relativ zur Umgebung keine Umgebungsluft die Oberfläche der Abdeckung erreicht. Die Abdeckung wird mit einem Querluftstrom beaufschlagt, dessen Richtung im Wesentlichen parallel zur Oberfläche der Abdeckung ist. Der Querluftstrom wird mittels zumindest einer Düse erzeugt, aus der Druckluft zugeführt wird, deren Druck konstant oder variabel ist.

Aus jedem der Dokumente JP H11 33448 A und CN 2 298 172 Y ist ein optischer Sensor bekannt, der von einer Ummantelung umschlossen ist. Der Sensor weist eine lichtdurchlässige Fläche auf, die mittels eines Druckluftstroms gereinigt wird. Dabei ist der Sensor zumindest teilweise von einer Wand der Ummantelung von dem Druckluftstrom getrennt.

### Offenbarung der Erfindung

Erfindungsgemäß wird ein optisches System für eine insbesondere in Form eines Lidar-Systems ausgebildete Umfelderfassungsvorrichtung zum Erfassen von Informationen über wenigstens ein Objekt anhand von ausgesendeten und nach ihrer Reflexion an dem wenigstens einen Objekt empfangenen Lichtpulsen bereitgestellt. Dabei umfasst das optische System ein insbesondere einen runden Querschnitt aufweisendes optisches Element mit einer an einen ersten Bereich einer Umgebung des optischen Systems angrenzenden ersten lichtdurchlässigen Fläche. Über die erste lichtdurchlässige Fläche können die Lichtpulse aus dem optischen System austreten und/oder in das optische System eintreten. Das optische System umfasst eine einen Strömungskanal aufweisende Schutzeinrichtung zum Schützen der ersten lichtdurchlässigen Fläche vor wenigstens einem sich in der Umgebung befindlichen Verschmutzungsobjekt. Der Strömungskanal kann von einem über ein erstes offenes Ende des Strömungskanals eintretenden Druckluftstrom durchströmt werden. Ferner ist der Strömungskanal derartig ausgebildet, dass der Druckluftstrom über ein zweites offenes Ende des Strömungskanals austreten und in die Umgebung eintreten kann und unmittelbar nach seinem Austreten aus dem Strömungskanal den ersten Bereich der Umgebung durchströmen kann.

Das optische System umfasst ferner eine innere Ummantelung und eine äußere Ummantelung. Die innere Ummantelung grenzt an ein inneres Volumen eines entsprechenden optischen Systems an. Die äußere Ummantelung umgibt die innere Ummantelung zumindest teilweise und ist gegenüber dieser beabstandet angeordnet. Der Strömungskanal ist durch eine der äußeren Ummantelung zugewandte Fläche der inneren Ummantelung und eine der inneren Ummantelung zugewandte Fläche der äußeren Ummantelung begrenzt und umfasst einen sich zwischen der inneren und der äußeren Ummantelung befindlichen Zwischenraum. Auf diese Weise kann der Strömungskanal in einfacher Weise durch Verwenden zweier beabstandet voneinander angeordneten Umhüllungen in ein entsprechendes optisches System integriert werden.

Weiterhin weisen die innere und die äußere Ummantelung jeweils zwei Enden auf, von denen bevorzugt ein Ende, äußerst bevorzugt beide Enden, auf einer jeweiligen senkrecht zur optischen Achse orientierten Fläche liegen. Ein erstes Ende jeder Ummantelung befindet sich auf einer dem ersten Bereich der Umgebung abgewandten Seite der entsprechenden Ummantelung. Ein zweites Ende jeder Ummantelung befindet sich auf einer dem ersten Bereich der Umgebung zugewandten Seite der entsprechenden Ummantelung. Dabei ist die innere Ummantelung an ihrem ersten Ende geschlossen und an ihrem zweiten Ende offen. Ferner ist die äußere Ummantelung an ihrem ersten und zweiten Ende jeweils offen. Des Weiteren umschließt die innere Ummantelung an ihrem zweiten Ende das optische Element. Ferner grenzt das erste Ende des Strömungskanals an das erste Ende der inneren und der äußeren Ummantelung jeweils an. Weiterhin grenzt das zweite Ende des Strömungskanals an das zweite Ende der inneren und der äußeren Ummantelung jeweils an.

Die Unteransprüche zeigen bevorzugte Weiterbildungen der Erfindung.

Vorteilhaft bei dem zuvor beschriebenen optischen System ist, dass der Druckluftstrom das wenigstens eine Verschmutzungsobjekt dauerhaft und ohne Unterbrechung von der ersten lichtdurchlässigen Fläche fernhalten kann. Die erste lichtdurchlässige Fläche kann folglich auch nicht zeitweise durch das wenigstens eine Verschmutzungsobjekt verschmutzt oder beschädigt werden und wird somit kontinuierlich sauber gehalten. Dadurch wird ermöglicht, dass, wenn das optische System in der Umfelderfassungsvorrichtung eingesetzt ist, die zum Erfassen der Informationen über das wenigstens eine Objekt benötigten Lichtpulse ohne Verhinderung durch Verschmutzungsobjekte aus dem optischen System austreten und/oder in das optische System eintreten können. Dadurch wird ferner ermöglicht, dass die Umfelderfassungsvorrichtung kontinuierlich und zuverlässig die Informationen über das wenigstens eine Objekt erfassen kann. Dies ist insbesondere dann wichtig, wenn die Umfelderfassungsvorrichtung in einem Fahrzeug einzusetzen ist und eine Fahrerassistenzfunktion oder ein autonomes Fahren dieses Fahrzeugs unterstützen soll. Hierbei zu berücksichtigen ist, dass bei einer solchen in einem Fahrzeug einzusetzenden Umfelderfassungsvorrichtung eine Verschmutzung der ersten lichtdurchlässigen Fläche auch nicht zeitweise zulässig ist. Bei einer solchen in einem Fahrzeug einzusetzenden Umfelderfassungsvorrichtung können die Informationen über das wenigstens eine Objekt dreidimensionale Daten über eine Position und/oder Bewegung des wenigstens einen Objektes umfassen. Die Umfelderfassungsvorrichtung kann ein Lidar-System sein, welches beispielsweise in Form einer dreidimensionalen Kamera ausgebildet ist und/oder mikrospiegelbasiert funktioniert.

Weiterhin vorteilhaft bei dem zuvor beschriebenen optischen System ist, dass eine Querschnittfläche des Druckluftstroms durch eine Querschnittfläche des Strömungskanals begrenzt ist. Folglich kann der Druckluftstrom energetisch günstig erzeugt werden.

Vorteilhaft bei dem zuvor beschriebenen optischen System ist es auch, dass der Strömungskanal bei einer Herstellung des optischen Systems in das optische System in einfacher und kostengünstiger Weise integriert werden kann.

Gemäß einer ersten bevorzugten Weiterbildung der Erfindung ist der Strömungskanal derartig vorgesehen, dass ein Endbereich des Strömungskanals am zweiten Ende des Strömungskanals, die erste lichtdurchlässige Fläche nicht abdeckt. Auf diese Weise können die Lichtpulse über die gesamte erste lichtdurchlässige Fläche aus dem entsprechenden optischen System austreten und/oder in das entsprechende optische Element eintreten und werden nicht durch den Strömungskanal verhindert.

Gemäß einer zweiten bevorzugten Weiterbildung der Erfindung bilden eine senkrecht zu einer optischen Achse des optischen Elements orientierte Querschnittfläche des optischen Elements und eine Strömungsgeschwindigkeit des aus dem Strömungskanal austretenden Druckluftstroms einen spitzen Winkel. Die zweite bevorzugte Weiterbildung kann mit der ersten bevorzugten Weiterbildung und/oder deren Ausgestaltungen kombiniert werden.

Gemäß einer dritten bevorzugten Weiterbildung der Erfindung weisen die innere und die äußeren Ummantelung entlang einer optischen Achse des optischen Elements jeweils einen zu einem Äußeren des optischen Systems hin gekrümmten Verlauf auf. Bevorzugt sind die innere und die äußere Ummantelung im Wesentlichen jeweils rotationssymmetrisch, bevorzugt kugelförmig, um die optische Achse des optischen Elements ausgebildet. Die dritte bevorzugte Weiterbildung kann mit einer oder mehreren der zuvor beschriebenen bevorzugten Weiterbildungen und/oder deren Ausgestaltungen kombiniert werden.

Gemäß einer vierten bevorzugten Weiterbildung der Erfindung ist das erste Ende der äußeren Ummantelung mit einem in dem optischen System angeordneten und insbesondere in Form eines Schlauchstutzens ausgebildeten Anschluss für eine Druckluftquelle verbunden. Bevorzugt umfasst der Schlauchstutzen Rippen zur Befestigung eines Schlauches. Die vierte bevorzugte Weiterbildung kann mit einer oder mehreren der zuvor beschriebenen bevorzugten Weiterbildungen und/oder deren Ausgestaltungen kombiniert werden.

Gemäß einer fünften bevorzugten Weiterbildung der Erfindung ist das optische Element in Form einer Linse oder Scheibe ausgebildet. Die fünfte bevorzugte Weiterbildung kann mit einer oder mehreren der zuvor beschriebenen bevorzugten Weiterbildungen und/oder deren Ausgestaltungen kombiniert werden.

Gemäß einer sechsten bevorzugten Weiterbildung der Erfindung umfasst ein zuvor beschriebenes optisches System eine Steuereinheit. Die Steuereinheit ist dazu ausgebildet, eine Strömungsgeschwindigkeit des Druckluftstroms in Abhängigkeit von einer Geschwindigkeit der Umfelderfassungsvorrichtung einzustellen. Alternativ oder zusätzlich ist die Steuereinheit dazu ausgebildet, anhand einer Auswertung der Informationen über das wenigstens eine Objekt eine Beschaffenheit des wenigstens einen Verschmutzungsobjekts zu erkennen und die Strömungsgeschwindigkeit des Druckluftstroms in Abhängigkeit der erkannten Beschaffenheit des wenigstens einen Verschmutzungsobjektes einzustellen. Dabei umfasst das wenigstens eine Objekt das wenigstens eine Verschmutzungsobjekt. Die sechste bevorzugte Weiterbildung kann mit einer oder mehreren der zuvor beschriebenen bevorzugten Weiterbildungen und/oder deren Ausgestaltungen kombiniert werden.

In Zusammenhang mit der sechsten bevorzugten Weiterbildung ist zu berücksichtigen, dass, wenn die Umfelderfassungsvorrichtung mit einem zuvor beschriebenen optischen System in einem Fahrzeug eingesetzt ist, die Geschwindigkeit der Umfelderfassungsvorrichtung mit einer Geschwindigkeit des Fahrzeugs übereinstimmt.

In Zusammenhang mit der sechsten bevorzugten Weiterbildung ist ferner zu berücksichtigen, dass, wenn das wenigstens eine Objekt das wenigstens eine Verschmutzungsobjekt umfasst, die Informationen über das wenigstens eine Objekt auch Informationen über das wenigstens eine Verschmutzungsobjekt enthalten. Folglich kann mittels der Steuereinheit anhand der Auswertung der Informationen über das wenigstens eine Objekt die Beschaffenheit des wenigstens einen Verschmutzungsobjektes erkannt werden. Das bedeutet, dass, wenn die Umfelderfassungsvorrichtung mit einem zuvor beschriebenen optischen Systems in einem Fahrzeug eingesetzt ist, mittels der Steuereinheit erkannt werden kann, ob das insbesondere während einer Fahrt vorkommende wenigstens eine Verschmutzungsobjekt beispielsweise Regentropfen und/oder Insekten und/oder Steine enthält. Dabei kann mittels der Steuereinheit während einer beim Regen stattfindenden Fahrt beispielsweise ein Druck des Druckluftstromes und folglich eine Strömungsgeschwindigkeit des Druckluftstromes eingestellt werden, so dass kein anfliegender Regentropfen auf die erste lichtdurchlässige Fläche kommt. Dabei kann ferner mittels der Steuereinheit während einer Fahrt, bei dem anfliegende Insekten oder Steine erkannt werden, beispielsweise ein maximaler Druck des Druckluftstromes und folglich eine maximale Strömungsgeschwindigkeit des Druckluftstromes eingestellt werden, so dass kein anfliegendes Insekt und/oder anfliegender Stein auf die erste lichtdurchlässige Fläche aufschlägt. Hierbei kann mittels der Steuereinheit den Druck des Druckluftstroms bevorzugt durch Regeln einer in den Strömungskanal pro Zeiteinheit eintretenden Luftmenge eingestellt werden.

Gemäß einer siebten bevorzugten Weiterbildung der Erfindung umfasst ein zuvor beschriebenes optisches System einen Reflektor. Dabei ist der Reflektor derartig in einem inneren Volumen des entsprechenden optischen Systems angeordnet, dass die mittels eines außerhalb dieses optischen Systems angeordneten Lichtsenders ausgesendeten Lichtpulse auf den Reflektor auftreffen. Diese Lichtpulse treten nach ihrer Reflektion an dem Reflektor ferner aus dem entsprechenden optischen System über die erste lichtdurchlässige Fläche aus. Alternativ oder zusätzlich ist der Reflektor derartig in einem inneren Volumen des entsprechenden optischen Systems angeordnet, dass die zu empfangenden Lichtpulse nach ihrem über die erste lichtdurchlässige Fläche erfolgten Eintreten in dieses optische System auf den Reflektor auftreffen. Diese Lichtpulse treffen nach ihrer Reflektion an dem Reflektor ferner auf eine lichtempfindliche Fläche eines außerhalb des entsprechenden optischen Systems angeordneten Lichtempfängers auf. Die siebte bevorzugte Weiterbildung kann mit einer oder mehreren der zuvor beschriebenen bevorzugten Weiterbildungen und/oder deren Ausgestaltungen kombiniert werden.

Gemäß einer achten bevorzugten Weiterbildung der Erfindung umfasst ein zuvor beschriebenes optisches System einen Lichtsender und/oder einen Lichtempfänger. Dabei ist der Lichtsender derartig innerhalb eines inneren Volumens des entsprechenden optischen Elements angeordnet, dass die von dem Lichtsender ausgesendeten Lichtpulse aus diesem optischen System über die erste lichtdurchlässige Fläche austreten. Alternativ oder zusätzlich ist der Lichtempfänger derartig in dem inneren Volumen des entsprechenden optischen Systems angeordnet, dass die von dem Lichtempfänger zu empfangenden Lichtpulse nach ihrem über die erste lichtdurchlässige Fläche erfolgten Eintreten in dieses optische System auf eine lichtempfindliche Fläche des Lichtempfängers auftreffen. Die achte bevorzugte Weiterbildung kann mit einer oder mehreren der zuvor beschriebenen bevorzugten Weiterbildungen und/oder deren Ausgestaltungen kombiniert werden.

Um bei einem zuvor beschriebenen System den Strömungskanal an einer in dem inneren Volumen des entsprechenden optischen Systems anzuordnenden Optik vorbei lenken zu können, wird der Strömungskanal bevorzugt gekrümmt um das innere Volumen des entsprechenden optischen Systems geführt.

Wenn die Umfelderfassungsvorrichtung in einem Fahrzeug einzusetzen ist, kann ein zuvor beschriebenes optisches System in einem Kühlergrill des Fahrzeugs untergebracht werden, so dass Druckluft, die von einer mittels eines Fahrzeugmotors betriebenen Druckluftquelle des Fahrzeugs kommt, den Strömungskanal beströmen und somit den Druckluftstrom erzeugen kann.

Ein weiterer Aspekt der Erfindung betrifft ein Lidar-System zum Erfassen von Informationen über wenigstens ein Objekt anhand von ausgesendeten und nach ihrer Reflexion an dem wenigstens einen Objekt empfangenen Lichtpulsen. Dabei umfasst das Lidar-System eine Sendeeinheit mit einem Lichtsender und eine Empfangseinheit mit einem Lichtempfänger. Die Sendeeinheit ist dazu ausgebildet, mittels des Lichtsenders die Lichtpulse in Form von Laserpulsen auszusenden. Die Empfangseinheit ist dazu ausgebildet, mittels des Lichtempfängers die von der Sendeeinheit ausgesendeten Laserpulse nach ihrer Reflektion an dem wenigstens einen Objekt zu empfangen. Ein optisches System des Lidar-Systems ist in gleicher Weise ausgebildet, in der ein zuvor beschriebenes optisches System ausgebildet ist. Dabei treten die mittels des Lichtsenders ausgesendeten Laserpulse aus dem optischen System über seine erste lichtdurchlässige Fläche aus. Alternativ oder zusätzlich treten die mittels des Lichtempfängers zu empfangenden Laserpulse in das optische System über seine erste lichtdurchlässige Fläche ein.
In Zusammenhang mit einem zuvor beschriebenen Lidar-System ist zu berücksichtigen, dass ein durch die Sendeeinheit vorgenommenes Aussenden der Laserpulse wesentlich kritischer als ein durch die Empfangseinheit vorgenommenes Empfangen der Laserpulse ist. Aus diesem Grund ist es vorteilhaft, wenn die Sende- und Empfangseinheit getrennt voneinander ausgebildet sind und zumindest die Sendeeinheit ein optisches System mit einer zuvor beschriebenen Schutzeinrichtung umfasst. Aus demselben Grund kann ferner die getrennt von der Sendeeinheit ausgebildete Empfangseinheit auch ein optisches System ohne eine zuvor beschriebene Schutzeinrichtung umfassen.

Ein anderer Aspekt der Erfindung betrifft ein Verfahren zum Schützen einer ersten lichtdurchlässige Fläche eines optischen Elements eines weiter oben beschriebenen optischen Systems vor wenigstens einem sich in einer Umgebung des optischen Systems befindlichen Verschmutzungsobjekt. Das Verfahren umfasst einen Schritt eines Beströmens des Strömungskanals mit dem Druckluftstrom. Das Verfahren umfasst ferner bevorzugt einen Schritt eines Einstellens der Strömungsgeschwindigkeit des Druckluftstromes in Abhängigkeit von der Geschwindigkeit der Vorrichtung und/oder der Beschaffenheit des wenigstens einen Verschmutzungsobjekts.

### Kurze Beschreibung der Zeichnung

Nachfolgend werden Ausführungsbeispiele der Erfindung unter Bezugnahme auf die begleitenden Zeichnungen im Detail beschrieben. Für gleiche Komponenten werden gleiche Bezugszeichen verwendet. Jede Komponente wird einmalig eingeführt und bei Wiederholung jeweils als schon bekannt behandelt, unabhängig davon, auf welche Zeichnung oder auf welches Ausführungsbeispiel sich ein jeweils entsprechender Beschreibungsteil, in dem die entsprechende Komponente wiederholt vorkommt, bezieht. In den Zeichnungen ist:
- Figur 1: ein gemäß einer ersten Ausführungsform der Erfindung ausgebildetes optisches System, das in einer Sendeeinheit eines ersten Lidar-Systems eingebaut werden kann,
- Figur 2: ein gemäß einer zweiten Ausführungsform der Erfindung ausgebildetes optisches System, das in einer Sendeeinheit eines zweiten Lidar-Systems eingebaut werden kann, und
- Figur 3: ein Fahrzeug, in dessen Außenhaut die Sende- und eine Empfangseinheit des zweiten Lidar-Systems eingebaut sind.

### Ausführungsform der Erfindung

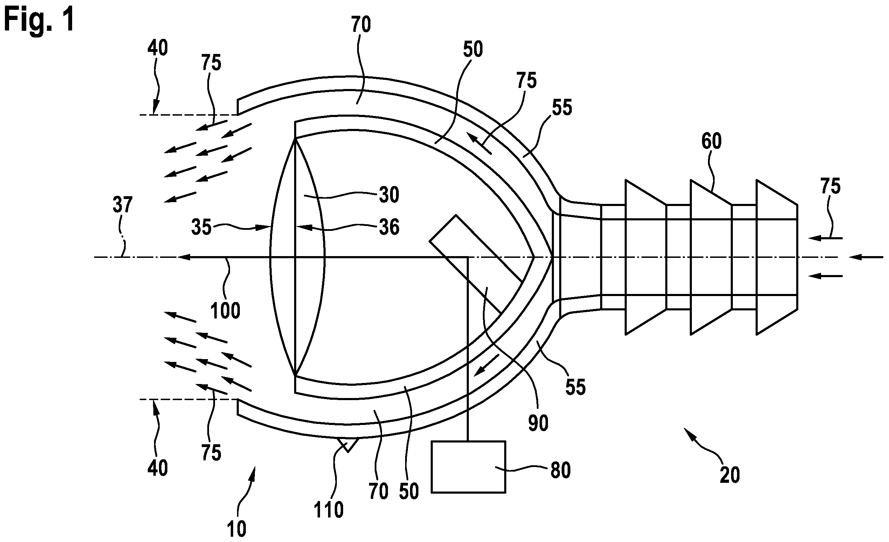

Figur 1 zeigt ein gemäß einer ersten Ausführungsform der Erfindung ausgebildetes optisches System 10, das in einer Sendeeinheit 20 eines ersten Lidar-Systems eingebaut werden kann. Dabei ist das erste Lidar-System dazu ausgebildet, Informationen über wenigstens ein sich in einem Umfeld des ersten Lidar-Systems befindlichen Objekt anhand von ausgesendeten und nach ihrer Reflexion an dem wenigstens einen Objekt empfangenen Lichtpulsen zu erfassen.

Das optische System 10 umfasst ein beispielsweise in Form einer Sammellinse ausgebildetes optisches Element 30 mit einer ersten lichtdurchlässigen Fläche 35, die an einen ersten Bereich 40 einer Umgebung des optischen Systems 10 angrenzt. Das optische System 10 umfasst ferner eine an ein inneres Volumen des optischen Systems 10 angrenzende innere Ummantelung 50. Das optische System 10 umfasst auch eine die innere Ummantelung 50 umgebende und gegenüber dieser beabstandet angeordnete äußere Ummantelung 55.

Die innere Ummantelung 50 umfasst zwei gegenüberliegende Enden. Ein erstes Ende der inneren Ummantelung 50 befindet sich auf einer dem ersten Bereich 40 der Umgebung abgewandten Seite der inneren Ummantelung 50. Ein zweites Ende der inneren Ummantelung 50 befindet sich auf einer dem ersten Bereich 40 der Umgebung zugewandten Seite der inneren Ummantelung 50. Dabei ist die innere Ummantelung 50 an ihrem ersten Ende geschlossen und an ihrem zweiten Ende offen. Ferner umschließt die innere Ummantelung 50 an ihrem zweiten Ende das optische Element 30. Weiterhin weist das erste Ende der inneren Ummantelung 50 eine Fläche auf, die kleiner als eine von dem zweiten Ende der inneren Ummantelung 50 umschlossene Fläche ist.
Die äußere Ummantelung 55 umfasst zwei gegenüberliegende Enden, von denen ein erstes Ende mit einem in dem optischen System 10 angeordneten Anschluss 60 für eine Druckluftquelle (nicht dargestellt) verbindbar ist. Das erste Ende der äußeren Ummantelung 55 befindet sich auf einer dem ersten Bereich 40 der Umgebung abgewandten Seite der äußeren Ummantelung 55. Ein zweites Ende der äußeren Ummantelung 55 befindet sich auf einer dem ersten Bereich 40 der Umgebung zugewandten Seite der äußeren Ummantelung 55. Dabei ist die äußere Ummantelung 55 an ihrem ersten und zweiten Ende jeweils offen. Ferner ist eine von dem ersten Ende der äußeren Ummantelung 55 umschlossene Fläche kleiner als eine von dem zweiten Ende der äußeren Ummantelung 55 umschlossene Fläche. Ferner liegt das erste Ende der äußeren Ummantelung 55 bezüglich eines Strömungskanals 70 des optischen Systems 10 unmittelbar gegenüber dem ersten Ende der inneren Ummantelung 50. Weiterhin liegt das zweite Ende der äußeren Ummantelung 55 bezüglich des Strömungskanals 70 unmittelbar gegenüber dem zweiten Ende der inneren Ummantelung 50. Auf einer der inneren Ummantelung 50 abgewandten Fläche der äußeren Ummantelung 55 sind Rastnasen 110 zur Befestigung des optischen Elements 10 in einer Fahrzeugaußenhaut angebracht.

Die innere und die äußeren Ummantelung 50, 55 weisen entlang einer optischen Achse 37 des optischen Elements 30 jeweils einen zu einem Äußeren des optischen Systems 10 hin gekrümmten Verlauf auf. Dabei sind die innere und die äußere Ummantelung 50, 55 jeweils rotationssymmetrisch um die optische Achse 37 des optischen Elements 30 ausgebildet.

Der Strömungskanal 70 ist durch eine der äußeren Ummantelung 55 zugewandte Fläche der inneren Ummantelung 50 und eine der inneren Ummantelung 50 zugewandte Fläche der äußeren Ummantelung 55 begrenzt und umfasst einen sich zwischen der inneren und der äußeren Ummantelung 50, 55 befindlichen Zwischenraum. Ferner umfasst der Strömungskanal 70 ein erstes offenes Ende, das an das erste Ende der inneren und der äußeren Ummantelung 50, 55 jeweils angrenzt. Weiterhin umfasst der Strömungskanal 70 ein zweites offenes Ende, das an das zweite Ende der inneren und der äußeren Ummantelung 50, 55 jeweils angrenzt. Über den Anschluss 60 kann ein von der Druckluftquelle erzeugter Druckluftstrom 75 über das erste Ende der äußeren Ummantelung 55 und das erste Ende des Strömungskanals 70 in den Strömungskanal 70 eintreten. Der in den Strömungskanal 70 eingetretene Druckluftstrom 75 durchströmt anschließend den Strömungskanal 70 und tritt über das zweite Ende des Strömungskanals 70 aus dem Strömungskanal 70 aus und in die Umgebung des optischen Systems 10 ein. Dabei wird die innere Ummantelung 50 von dem Druckluftstrom 75 während eines Durchströmens des Strömungskanals 70 umströmt.

Ferner ist der Strömungskanal 70 derartig ausgebildet, dass der Druckluftstrom 75 unmittelbar nach seinem Austreten aus dem Strömungskanal 70 den ersten Bereich 40 der Umgebung durchströmt. Hierbei zu berücksichtigen ist, dass eine Querschnittfläche 36 des optischen Elements 30 und eine Strömungsgeschwindigkeit des aus dem Strömungskanal 70 austretenden Druckluftstroms 75 einen spitzen Winkel bilden. Dabei erstreckt sich die Querschnittfläche 36 des optischen Elements 30 senkrecht zu der optischen Achse 37 des optischen Elements 30. Dadurch wird gewährleistet, dass der Druckluftstrom 75 unmittelbar nach seinem Austreten aus dem Strömungskanal 70 den ersten Bereich 40 der Umgebung durchströmt.

Bei geeigneter Wahl der Strömungsgeschwindigkeit des Druckluftstromes 75 kann ein jedes sich in der Umgebung des optischen Systems 10 befindliches und auf die erste lichtdurchlässige Fläche 35 zufliegendes Verschmutzungsobjekt durch den Druckluftstrom 75 von der ersten lichtdurchlässigen Fläche 35 fern gehalten werden. Dadurch kann die erste lichtdurchlässige Fläche 35 dauerhaft und ohne Unterbrechung sauber gehalten werden.

Die Sendeeinheit 20 umfasst einen in Form eines Lasers 80 ausgebildeten und außerhalb des optischen Elements 10 angeordneten Lichtsender, der dazu ausgebildet ist, die Lichtpulse in Form von Laserpulsen 100 auszusenden. Die ausgesendeten Laserpulse 100 treffen auf einen in dem optischen System 10 angeordneten und in Form eines Mikrospiegels 90 ausgebildeten Reflektor auf. Die ausgesendeten und von dem Mikrospiegel 90 reflektierten Laserpulse 100 treten über das optische Element 30 und die erste lichtdurchlässige Fläche 35 aus dem optischen System 10 aus und in die Umgebung des optischen Systems 10 ein.

Dadurch, dass die erste lichtdurchlässige Fläche 35 durch den Druckluftstrom 75 dauerhaft sauber gehalten wird, können die ausgesendeten Laserpulse 100 beim Austreten aus dem optischen System 10 nicht durch sich auf der ersten lichtdurchlässigen Fläche 35 befindliche Verschmutzungsobjekte reflektiert und/oder gebrochen werden. Dadurch kann ein durch die Sendeeinheit 20 vorgenommenes Aussenden der Laserpulse 100 kontinuierlich und zuverlässig erfolgen.

Das erste Lidar-System umfasst ferner eine gegenüber der Sendeeinheit getrennt ausgebildete Empfangseinheit (nicht dargestellt) und eine Auswerteeinheit (nicht dargestellt). Die aus dem optischen System 10 austretenden Laserpulse 100 werden nach ihrer Reflexion an dem wenigstens einen Objekt mittels eines Lichtempfängers der Empfangseinheit empfangen und zur Erfassung der Informationen über das wenigstens eine Objekt mittels der Auswerteeinheit ausgewertet. Folglich führt ein kontinuierliches und zuverlässiges Aussenden der Laserpulse 100 zu einer sehr guten Qualität der erfassten Informationen über das wenigstens eine Objekt.

Zusätzlich kann ein optisches System der Empfangseinheit in gleicher Weise ausgebildet sein, in der ein zuvor beschriebenes optisches System 10 ausgebildet ist. In einem solchen Fall ist der Lichtempfänger außerhalb des optischen Elements der Empfangseinheit angeordnet.

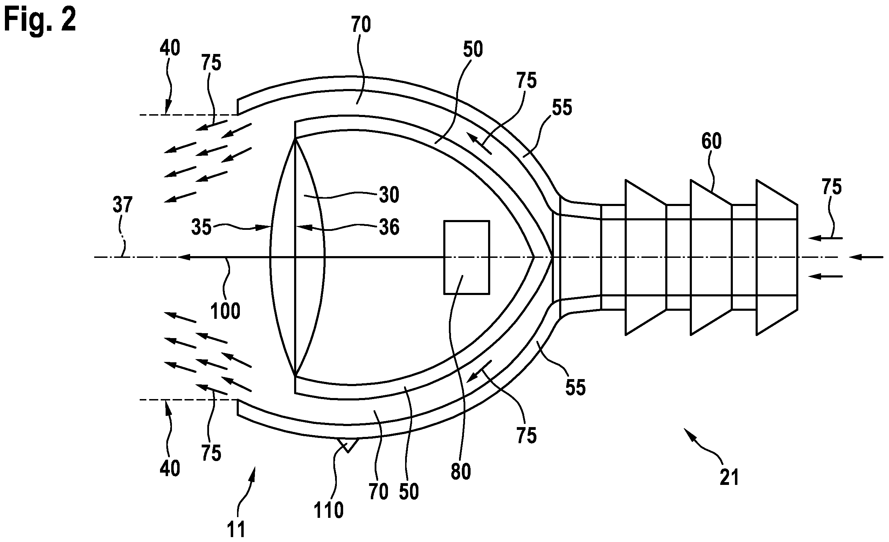

Figur 2 zeigt ein gemäß einer zweiten Ausführungsform der Erfindung ausgebildetes optisches System 11, das in einer Sendeeinheit 21 eines zweiten Lidar-Systems eingebaut werden kann. Die optischen Systeme 10, 11 gemäß der ersten und der zweiten Ausführungsform unterscheiden sich nur dadurch, dass bei dem optischen System 11 gemäß der zweiten Ausführungsform der Laser 80 in dem inneren Volumen dieses optischen Systems 11 angeordnet ist. Die Sendeeinheit 21 des zweiten Lidar-Systems benötigt folglich keinen Reflektor. Die Sendeinheiten 20, 21 des ersten und des zweiten Lidar-Systems weisen die gleiche Funktionalität auf.

Das zweite Lidar-System umfasst eine Empfangseinheit (nicht dargestellt) und eine Auswerteeinheit (nicht dargestellt). Die Empfangseinheit des zweiten Lidar-Systems umfasst ein optisches System und einen Lichtempfänger. Bei dem zweiten Lidar-System kann der entsprechende Lichtempfänger in einem inneren Volumen dieses optischen Systems angeordnet sein. In einem solchen Fall benötigt die Empfangseinheit des zweiten Lidar-Systems folglich auch keinen Reflektor. Dabei können die optischen Systeme der Sendeeinheit 21 und der Empfangseinheit des zweiten Lidar-Systems ansonsten in gleicher Weise ausgebildet sein. Die Empfangseinheiten des ersten und des zweiten Lidar-Systems weisen die gleiche Funktionalität auf. Ferner weisen auch die Auswerteeinheiten des ersten und des zweiten Lidar-Systems die gleiche Funktionalität auf.

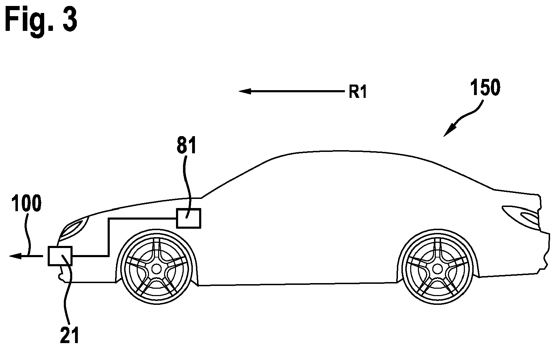

Figur 3 zeigt ein Fahrzeug 150, in dessen Außenhaut die Sendeeinheit 21 und die Empfangseinheit des zweiten Lidar-Systems nebeneinander eingebaut sind. Zu Vereinfachungszwecken wurden die Empfangseinheit und die Auswerteeinheit des zweiten Lidar-Systems nicht in der Figur 3 dargestellt.

Aus der Figur 3 ist ersichtlich, dass die Sendeeinheit 21 des zweiten Lidar-Systems die Laserpulse 100 in eine Fahrtrichtung R1 des Fahrzeuges 150 aussendet. Figur 3 zeigt auch eine Steuereinheit 81 des zweiten Lidar-Systems, die dazu ausgebildet ist, den Laser 80 der entsprechenden Sendeeinheit 21 zum Aussenden der Laserpulse 100 anzusteuern. Die ausgesendeten Laserpulse 100 werden dann nach ihrere Reflexion an dem wenigstens einen Objekt (nicht dargestellt) von dem Lichtempfänger der Empfangseinheit des zweiten Lidar-Systems empfangen.

Neben der voranstehenden schriftlichen Offenbarung wird hiermit zur weiteren Offenbarung der Erfindung ergänzend auf die Darstellung in den Figuren 1 bis 3 Bezug genommen.

## Patentansprüche

1. Optisches System (10, 11) für eine insbesondere in Form eines Lidar-Systems ausgebildete Umfelderfassungsvorrichtung zum Erfassen von Informationen über wenigstens ein Objekt anhand von ausgesendeten und nach ihrer Reflexion an dem wenigstens einen Objekt empfangenen Lichtpulsen (100), wobei das optische System (10, 11) ein optisches Element (30) mit einer an einen ersten Bereich (40) einer Umgebung des optischen Systems (10,11) angrenzenden ersten lichtdurchlässigen Fläche (35) aufweist, über welche die Lichtpulse (100) aus dem optischen System (10) austreten und/oder in das optische System (10, 11) eintreten können, wobei das optisches System (10, 11) eine einen Strömungskanal (70) aufweisende Schutzeinrichtung zum Schützen der ersten lichtdurchlässigen Fläche (35) vor wenigstens einem sich in der Umgebung befindlichen Verschmutzungsobjekt umfasst, wobei der Strömungskanal (70) von einem über ein erstes offenes Ende des Strömungskanals (70) eintretenden Druckluftstrom (75) durchströmt werden kann und derartig ausgebildet ist, dass der Druckluftstrom (75) über ein zweites offenes Ende des Strömungskanals (70) aus dem Strömungskanal (70) austreten und in die Umgebung eintreten kann und unmittelbar nach seinem Austreten aus dem Strömungskanal (70) den ersten Bereich (40) der Umgebung durchströmen kann,
**gekennzeichnet durch**
eine an ein inneres Volumen des optischen Systems (10,11) angrenzende innere Ummantelung (50) und eine die innere Ummantelung (50) zumindest teilweise umgebende und gegenüber dieser beabstandet angeordnete äußere Ummantelung (55), wobei der Strömungskanal (70) durch eine der äußeren Ummantelung (55) zugewandte Fläche der inneren Ummantelung (50) und eine der inneren Ummantelung (50) zugewandte Fläche der äußeren Ummantelung (55) begrenzt ist und einen sich zwischen der inneren und der äußeren Ummantelung (50, 55) befindlichen Zwischenraum umfasst,
wobei die innere und die äußere Ummantelung (50, 55) jeweils zwei Enden aufweisen, wobei sich ein erstes Ende jeder Ummantelung (50, 55) auf einer dem ersten Bereich (40) der Umgebung abgewandten Seite der entsprechenden Ummantelung (50, 55) befindet und wobei sich ein zweites Ende jeder Ummantelung (50, 55) auf einer dem ersten Bereich (40) der Umgebung zugewandten Seite der entsprechenden Ummantelung (50, 55) befindet, wobei die innere Ummantelung (50) an ihrem ersten Ende geschlossen und an ihrem zweiten Ende offen ist und die äußere Ummantelung (55) an ihrem ersten und zweiten Ende jeweils offen ist, wobei die innere Ummantelung (50) an ihrem zweiten Ende das optische Element (30) umschließt und wobei das erste Ende des Strömungskanals (70) an das erste Ende der inneren und der äußeren Ummantelung (50, 55) jeweils angrenzt und das zweite Ende des Strömungskanals (70) an das zweite Ende der inneren und der äußeren Ummantelung (50, 55) jeweils angrenzt.

2. Optisches System (10, 11) nach Anspruch 1, **dadurch gekennzeichnet, dass** der Strömungskanal (70) derartig vorgesehen ist, dass ein Endbereich des Strömungskanals (70) am zweiten Ende des Strömungskanals (70) die erste lichtdurchlässige Fläche (35) nicht abdeckt.

3. Optisches System (10, 11) nach einem der Ansprüche 1 oder 2, **dadurch gekennzeichnet, dass** eine Querschnittfläche (36) des optischen Elements (30) und eine Strömungsrichtung des aus dem Strömungskanal (70) austretenden Druckluftstroms (75) einen spitzen Winkel bilden, wobei sich die Querschnittfläche (36) des optischen Elements (30) senkrecht zu einer optischen Achse (37) des optischen Elements (30) erstreckt.

4. Optisches System (10, 11) nach einem der vorangehenden Ansprüche, **dadurch gekennzeichnet, dass** die innere und die äußeren Ummantelung (50, 55) entlang einer optischen Achse (37) des optischen Elements (30) jeweils einen zu einem Äußeren des optischen Systems (10, 11) hin gekrümmten Verlauf aufweisen und jeweils bevorzugt im Wesentlichen rotationssymmetrisch um die optische Achse (37) des optischen Elements (30) ausgebildet sind.

5. Optisches System (10, 11) nach einem der vorangehenden Ansprüche, **dadurch gekennzeichnet, dass** das erste Ende der äußeren Ummantelung (55) mit einem in dem optischen System (10, 11) angeordneten Anschluss (60) für eine Druckluftquelle verbunden ist.

6. Optisches System (10, 11) nach einem der vorangehenden Ansprüche, **dadurch gekennzeichnet, dass** das optische Element (30) in Form einer Linse oder Scheibe ausgebildet ist.

7. Optisches System (10, 11) nach einem der vorangehenden Ansprüche, **gekennzeichnet durch** eine Steuereinheit, wobei die Steuereinheit dazu ausgebildet ist, eine Strömungsgeschwindigkeit des Druckluftstroms (75) in Abhängigkeit von einer Geschwindigkeit der Umfelderfassungsvorrichtung einzustellen und/oder wobei das wenigstens eine Objekt das wenigstens eine Verschmutzungsobjekt umfasst und die Steuereinheit dazu ausgebildet ist, anhand einer Auswertung der Informationen über das wenigstens eine Objekt eine Beschaffenheit des wenigstens einen Verschmutzungsobjekts zu erkennen und die Strömungsgeschwindigkeit des Druckluftstroms (75) in Abhängigkeit der erkannten Beschaffenheit des wenigstens einen Verschmutzungsobjektes einzustellen.

8. Optisches System (10) nach einem der vorangehenden Ansprüche, **gekennzeichnet durch** einen Reflektor (90), wobei der Reflektor (90) derartig in einem inneren Volumen des optischen Systems (10) angeordnet ist, dass die mittels eines außerhalb des optischen Systems (10) angeordneten Lichtsenders (80) ausgesendeten Lichtpulse (100) auf den Reflektor (90) auftreffen und nach ihrer Reflektion an dem Reflektor (90) aus dem optischen System (10) über die erste lichtdurchlässige Fläche (35) austreten, und/oder wobei der Reflektor (90) derartig in einem inneren Volumen des optischen Systems (10) angeordnet ist, dass die zu empfangenden Lichtpulse (100) nach ihrem über die erste lichtdurchlässige Fläche (35) erfolgten Eintreten in das optische System (10) auf den Reflektor (90) auftreffen und nach ihrer Reflektion an dem Reflektor (90) auf eine lichtempfindliche Fläche eines außerhalb des optischen Systems (10) angeordneten Lichtempfängers auftreffen.

9. Optisches System (11) nach einem der Ansprüche 1 bis 7, **gekennzeichnet durch** einen Lichtsender (80) und/oder einen Lichtempfänger, wobei der Lichtsender (80) derartig innerhalb eines inneren Volumens des optischen Elements (11) angeordnet ist, dass die von dem Lichtsender (80) ausgesendeten Lichtpulse (100) aus dem optischen System (11) über die erste lichtdurchlässige Fläche (35) austreten, und/oder wobei der Lichtempfänger derartig in dem inneren Volumen des optischen Systems (11) angeordnet ist, dass die von dem Lichtempfänger zu empfangenden Lichtpulse (100) nach ihrem über die erste lichtdurchlässige Fläche (35) erfolgten Eintreten in das optische System (11) auf eine lichtempfindliche Fläche des Lichtempfängers auftreffen.

10. Lidar-System zum Erfassen von Informationen über wenigstens ein Objekt anhand von ausgesendeten und nach ihrer Reflexion an dem wenigstens einen Objekt empfangenen Lichtpulsen (100), wobei das Lidar-System eine Sendeeinheit (20) mit einem Lichtsender (80) und eine Empfangseinheit mit einem Lichtempfänger umfasst, wobei die Sendeeinheit (20, 21) dazu ausgebildet ist, mittels des Lichtsenders (80) die Lichtpulse (100) in Form von Laserpulsen (100) auszusenden, und die Empfangseinheit dazu ausgebildet ist, mittels des Lichtempfängers die von der Sendeeinheit (20) ausgesendeten Laserpulse (100) nach ihrer Reflektion an dem wenigstens einen Objekt zu empfangen, **gekennzeichnet durch** ein optisches System (10, 11) gemäß einem der vorangehenden Ansprüche, wobei die mittels des Lichtsenders (80) ausgesendeten Laserpulse (100) aus dem optischen System (10, 11) über seine erste lichtdurchlässige Fläche (35) austreten und/oder wobei die mittels des Lichtempfängers zu empfangenden Laserpulse (100) in das optische System (10, 11) über seine erste lichtdurchlässige Fläche (35) eintreten.

11. Verfahren zum Schützen einer ersten lichtdurchlässige Fläche (35) eines optischen Elements (30) eines optischen Systems (10, 11) vor wenigstens einem sich in einer Umgebung des optischen Systems (10, 11) befindlichen Verschmutzungsobjekt, wobei das optische System (10, 11) für eine Umfelderfassungsvorrichtung zum Erfassen von Informationen über wenigstens ein Objekt anhand von ausgesendeten und nach ihrer Reflexion an dem wenigstens einen Objekt (30) empfangenen Lichtpulsen (100) ausgebildet ist, **dadurch gekennzeichnet, dass** das optische System (10, 11) gemäß einem der Ansprüche 1 bis 9 ausgebildet ist und das Verfahren folgende Schritte umfasst:
Beströmen des Strömungskanals (70) mit dem Druckluftstrom (75) und
bevorzugtes Einstellen der Strömungsgeschwindigkeit des Druckluftstromes (75) in Abhängigkeit von der Geschwindigkeit der Umfelderfasssungsvorrichtung und/oder der Beschaffenheit des wenigstens einen Verschmutzungsobjekts.

## Claims

1. Optical system (10, 11) for a surroundings detection apparatus, embodied, in particular, in the form of a lidar system, for detecting information items about at least one object on the basis of light pulses (100) that are emitted and received after the reflection thereof on the at least one object, wherein the optical system (10, 11) has an optical element (30) with a first light-transmissive area (35) adjoining a first region (40) of surroundings of the optical system (10, 11), by means of which first light-transmissive area the light pulses (100) are able to emerge from the optical system (10) and/or enter into the optical system (10, 11), wherein the optical system (10, 11) comprises a protection device, having a flow channel (70), for protecting the first light-transmissive area (35) from at least one contamination object situated in the surroundings, wherein the flow channel (70) can have a pressurized air flow (75), which enters via a first open end of the flow channel (70), pass therethrough and wherein said flow channel is embodied in such a way that the pressurized air flow (75) is able to emerge from the flow channel (70) via a second open end of the flow channel (70) and able to enter into the surroundings and able to pass through the first region (40) of the surroundings immediately after its emergence from the flow channel (70),
**characterized by**
an inner jacket (50) adjoining an inner volume of the optical system (10, 11) and an outer jacket (55) that at least partly surrounds the inner jacket (50) and that is arranged at a distance therefrom, wherein the flow channel (70) is delimited by an area of the inner jacket (50) facing the outer jacket (55) and an area of the outer jacket (55) facing the inner jacket (50) and wherein said flow channel comprises an interstice that is situated between the inner and the outer jacket (50, 55),
wherein the inner and the outer jacket (50, 55) each have two ends, wherein a first end of each jacket (50, 55) is situated on the side of the corresponding jacket (50, 55) facing away from the first region (40) of the surroundings and wherein a second end of each jacket (50, 55) is situated on a side of the corresponding jacket (50, 55) facing the first region (40) of the surroundings, wherein the inner jacket (50) is sealed at its first end and open at its second end and the outer jacket (55) is open at both its first and second end, wherein the inner jacket (50), at its second end, surrounds the optical element (30) and wherein the first end of the flow channel (70) in each case adjoins the first end of the inner and the outer jacket (50, 55) and the second end of the flow channel (70) in each case adjoins the second end of the inner and the outer jacket (50, 55).

2. Optical system (10, 11) according to Claim 1, **characterized in that** the flow channel (70) is provided in such a way that an end region of the flow channel (70) does not cover the first light-transmissive area (35) at the second end of the flow channel (70).

3. Optical system (10, 11) according to either of Claims 1 and 2, **characterized in that** a cross-sectional area (36) of the optical element (30) and a flow direction of the pressurized air flow (75) emerging from the flow channel (70) form an acute angle, wherein the cross-sectional area (36) of the optical element (30) extends perpendicular to an optical axis (37) of the optical element (30).

4. Optical system (10, 11) according to any one of the preceding claims, **characterized in that**, along an optical axis (37) of the optical element (30), the inner and the outer jacket (50, 55) each have a curved profile towards an outside of the optical system (10, 11) and each preferably have an embodiment that is substantially rotationally symmetrical about the optical axis (37) of the optical element (30).

5. Optical system (10, 11) according to any one of the preceding claims, **characterized in that** the first end of the outer jacket (55) is connected to a connector (60), arranged within the optical system (10, 11), for a pressurized air source.

6. Optical system (10, 11) according to any one of the preceding claims, **characterized in that** the optical element (30) is embodied in the form of a lens or a panel.

7. Optical system (10, 11) according to any one of the preceding claims, **characterized by** a control unit, wherein the control unit is embodied to set a flow speed of the pressurized air flow (75) depending on a speed of the surroundings detection apparatus and/or wherein the at least one object comprises the at least one contamination object and the control unit is embodied to identify a character of the at least one contamination object on the basis of an evaluation of information items about the at least one object and set the flow speed of the pressurized air flow (75) depending on the identified character of the at least one contamination object.

8. Optical system (10) according to any one of the preceding claims, **characterized by** a reflector (90), wherein the reflector (90) is arranged in an inner volume of the optical system (10) in such a way that the light pulses (100) emitted by means of a light transmitter (80) arranged outside of the optical system (10) strike the reflector (90) and, after their reflection at the reflector (90), emerge from the optical system (10) via the first light-transmissive area (35), and/or wherein the reflector (90) is arranged in an inner volume of the optical system (10) in such a way that the light pulses (100) to be received strike the reflector (90) after the they have entered the optical system (10) via the first light-transmissive area (35) and strike a light-sensitive area of a light receiver arranged outside of the optical system (10) after their reflection at the reflector (90).

9. Optical system (11) according to any one of Claims 1 to 7, **characterized by** a light transmitter (80) and/or a light receiver, wherein the light transmitter (80) is arranged within an inner volume of the optical element (11) in such a way that the light pulses (100) emitted by the light transmitter (80) emerge from the optical system (11) via the first light-transmissive area (35), and/or wherein the light receiver is arranged in the inner volume of the optical system (11) in such a way that the light pulses (100) to be received by the light receiver strike a light-sensitive area of the light receiver after they have entered into the optical system (11) via the first light-transmissive area (35).

10. Lidar system for detecting information items about at least one object on the basis of light pulses (100) that are emitted and received after the reflection thereof on the at least one object, wherein the lidar system comprises a transmitter unit (20) with a light transmitter (80) and a receiver unit with a light receiver, wherein the transmitter unit (20, 21) is embodied to emit the light pulses (100) in the form of laser pulses (100) by means of the light transmitter (80) and the receiver unit is embodied to receive, by means of the light receiver, the light pulses (100) emitted by the transmitter unit (20) after their reflection on the at least one object, **characterized by** an optical system (10, 11) according to any one of the preceding claims, wherein the laser pulses (100) emitted by means of the light transmitter (80) emerge from the optical system (10, 11) via its first light-transmissive area (35) and/or wherein the laser pulses (100) to be received by means of the light receiver enter into the optical system (10, 11) via its first light-transmissive area (35).

11. Method for protecting a first light-transmissive area (35) of an optical element (30) of an optical system (10, 11) from at least one contamination object situated in surroundings of the optical system (10, 11), wherein the optical system (10, 11) is embodied for a surroundings detection apparatus for detecting information items about at least one object on the basis of light pulses (100) that are emitted and received after the reflection thereof on the at least one object (30), **characterized in that** the optical system (10, 11) is embodied according to any one of Claims 1 to 9 and the method comprises the following steps:
passing of the pressurized air flow (75) through the flow channel (70) and preferred setting of the flow speed of the pressurized air flow (75) depending on the speed of the surroundings detection apparatus and/or the character of the at least one contamination object.

## Revendications

1. Système optique (10, 11) pour un dispositif de balayage de l'environnement, notamment réalisé sous la forme d'un système lidar, destiné à acquérir des informations à propos d'au moins un objet à l'aide d'impulsions lumineuses (100) émises et reçues après leur réflexion sur l'au moins un objet, le système optique (10, 11) possédant un élément optique (30) ayant une première surface transparente à la lumière (35) adjacente à une première zone (40) d'un environnement du système optique (10, 11), par le biais de laquelle les impulsions lumineuses (100) peuvent sortir du système optique (10) et/ou pénétrer dans le système optique (10, 11), le système optique (10, 11) comportant un dispositif de protection possédant un canal d'écoulement (70) destiné à protéger la première surface transparente à la lumière (35) contre au moins un objet salissant qui se trouve dans l'environnement, le canal d'écoulement (70) pouvant être traversé par un courant d'air comprimé (75) qui pénètre par le biais d'une première extrémité ouverte du canal d'écoulement (70) et étant configuré de telle sorte que le courant d'air comprimé (75) peut sortir du canal d'écoulement (70) et pénétrer dans l'environnement par le biais d'une deuxième extrémité ouverte du canal d'écoulement (70) et peut s'écouler à travers la première zone (40) de l'environnement immédiatement après sa sortie du canal d'écoulement (70),
**caractérisé par**
une enveloppe interne (50) adjacente à un volume interne du système optique (10, 11) et une enveloppe externe (55) qui entoure au moins partiellement l'enveloppe interne (50) et qui est disposée de manière espacée de celle-ci, le canal d'écoulement (70) étant délimité par une surface de l'enveloppe interne (50) qui fait face à l'enveloppe externe (55) et une surface de l'enveloppe externe (55) qui fait face à l'enveloppe interne (50) et comportant un espace intermédiaire qui se trouve entre les enveloppes interne et externe (50, 55),
les enveloppes interne et externe (50, 55) possédant respectivement deux extrémités, une première extrémité de chaque enveloppe (50, 55) se trouvant sur un côté de l'enveloppe (50, 55) correspondante à l'opposé de la première zone (40) de l'environnement et une deuxième extrémité de chaque enveloppe (50, 55) se trouvant sur un côté de l'enveloppe (50, 55) correspondante qui fait face à la première zone (40) de l'environnement, l'enveloppe interne (50) étant fermée au niveau de sa première extrémité et ouverte au niveau de sa deuxième extrémité et l'enveloppe externe (55) étant respectivement ouverte au niveau de sa première et de sa deuxième extrémité, l'enveloppe interne (50) entourant l'élément optique (30) au niveau de sa deuxième extrémité et la première extrémité du canal d'écoulement (70) étant respectivement adjacente à la première extrémité de l'enveloppe interne et externe (50, 55) et la deuxième extrémité du canal d'écoulement (70) étant respectivement adjacente à la deuxième extrémité de l'enveloppe interne et externe (50, 55).

2. Système optique (10, 11) selon la revendication 1, **caractérisé en ce que** le canal d'écoulement (70) est conçu de telle sorte qu'une zone d'extrémité du canal d'écoulement (70) au niveau de la deuxième extrémité du canal d'écoulement (70) ne recouvre pas la première surface transparente à la lumière (35).

3. Système optique (10, 11) selon l'une des revendications 1 ou 2, **caractérisé en ce qu'**une surface de section transversale (36) de l'élément optique (30) et une direction d'écoulement du courant d'air comprimé (75) qui sort du canal d'écoulement (70) forment un angle aigu, la surface de section transversale (36) de l'élément optique (30) s'étendant perpendiculairement à un axe optique (37) de l'élément optique (30).

4. Système optique (10, 11) selon l'une des revendications précédentes, **caractérisé en ce que** les enveloppes interne et externe (50, 55), le long d'un axe optique (37) de l'élément optique (30), présentent respectivement un tracé curviligne vers un extérieur du système optique (10, 11) et sont respectivement configurées de préférence sensiblement en symétrie de rotation autour de l'axe optique (37) de l'élément optique (30).

5. Système optique (10, 11) selon l'une des revendications précédentes, **caractérisé en ce que** la première extrémité de l'enveloppe externe (55) est reliée à un raccord (60) disposé dans le système optique (10, 11) pour une source d'air comprimé.

6. Système optique (10, 11) selon l'une des revendications précédentes, **caractérisé en ce que** l'élément optique (30) est réalisé sous la forme d'une lentille ou d'un disque.

7. Système optique (10, 11) selon l'une des revendications précédentes, **caractérisé par** une unité de commande, l'unité de commande étant configurée pour régler une vitesse d'écoulement du courant d'air comprimé (75) en fonction d'une vitesse du dispositif de balayage de l'environnement et/ou l'au moins un objet comportant l'au moins un objet salissant et l'unité de commande étant configurée pour, à l'aide d'une évaluation des informations à propos de l'au moins un objet, reconnaître une nature de l'au moins un objet salissant et régler la vitesse d'écoulement du courant d'air comprimé (75) en fonction de la nature reconnue de l'au moins un objet salissant.

8. Système optique (10) selon l'une des revendications précédentes, **caractérisé par** un réflecteur (90), le réflecteur (90) étant disposé dans un volume interne du système optique (10) de telle sorte que les impulsions lumineuses (100) émises par un émetteur de lumière (80) disposé à l'extérieur du système optique (10) sont incidentes sur le réflecteur (90) et, après leur réflexion sur le réflecteur (90), sortent du système optique (10) par le biais de la première surface transparente à la lumière (35) et/ou le réflecteur (90) étant disposé dans un volume interne du système optique (10) de telle sorte que les impulsions lumineuses (100) à recevoir, après leur pénétration réussie dans le système optique (10) par le biais de la première surface transparente à la lumière (35), sont incidentes sur le réflecteur (90) et, après leur réflexion sur le réflecteur (90), sont incidentes sur une surface photosensible d'un récepteur de lumière disposé à l'extérieur du système optique (10).

9. Système optique (11) selon l'une des revendications 1 à 7, **caractérisé par** un émetteur de lumière (80) et/ou un récepteur de lumière, l'émetteur de lumière (80) étant disposé à l'intérieur d'un volume interne de l'élément optique (11) de telle sorte que les impulsions lumineuses (100) émises par l'émetteur de lumière (80) sortent du système optique (11) par le biais de la première surface transparente à la lumière (35) et/ou le récepteur de lumière étant disposé dans le volume interne du système optique (11) de telle sorte que les impulsions lumineuses (100) à recevoir par le récepteur de lumière, après leur pénétration réussie dans le système optique (11) par le biais de la première surface transparente à la lumière (35), sont incidentes sur une surface photosensible du récepteur de lumière.

10. Système lidar destiné à acquérir des informations à propos d'au moins un objet à l'aide d'impulsions lumineuses (100) émises et reçues après leur réflexion sur l'au moins un objet, le système lidar comportant une unité d'émission (20) dotée d'un émetteur de lumière (80) et une unité de réception dotée d'un récepteur de lumière, l'unité d'émission (20, 21) étant configurée pour émettre les impulsions lumineuses (100) sous la forme d'impulsions laser (100) au moyen de l'émetteur de lumière (80), et l'unité de réception étant configurée pour recevoir, au moyen du récepteur de lumière, les impulsions laser (100) émises par l'unité d'émission (20) après leur réflexion sur l'au moins un objet, **caractérisé par** un système optique (10, 11) selon l'une des revendications précédentes, les impulsions laser (100) émises au moyen de l'émetteur de lumière (80) sortant du système optique (10, 11) par le biais de sa première surface transparente à la lumière (35) et/ou les impulsions laser (100) à recevoir au moyen du récepteur de lumière pénétrant dans le système optique (10, 11) par le biais de sa première surface transparente à la lumière (35).

11. Procédé pour protéger une première surface transparente à la lumière (35) d'un élément optique (30) d'un système optique (10, 11) contre au moins un objet salissant qui se trouve dans un environnement du système optique (10, 11), le système optique (10, 11) étant configuré pour un dispositif de balayage de l'environnement destiné à acquérir des informations à propos d'au moins un objet à l'aide d'impulsions lumineuses (100) émises et reçues après leur réflexion sur l'au moins un objet (30), **caractérisé en ce que** le système optique (10, 11) est configuré selon l'une des revendications 1 à 9 et le procédé comprend les étapes suivantes :
injection dans le canal d'écoulement (70) du courant d'air comprimé (75) et de préférence réglage de la vitesse d'écoulement du courant d'air comprimé (75) en fonction de la vitesse du dispositif de balayage de l'environnement et/ou de la nature de l'au moins un objet salissant.
